# EUROPEAN PATENT APPLICATION

(11) **EP 4 737 058 A1**
(43) Date of publication of application: **06.05.2026**
(21) Application number: 24210100.4
(22) Date of filing: 31.10.2024
(51) Int. Cl.: B23Q 3/155

(54) **SOCKET FOR RECEIVING MACHINING TOOL**

(71) Applicant: Sanjet International Co., Ltd., Daya Dist. Taichung City 428 (TW)
(72) Inventor: CHANG, CHING-SAN, 428 Taichung City (TW)
(74) Representative: Cabinet Chaillot

(57) **Abstract**

A socket (100, 100A, 100B) for receiving a machining tool (200) includes a main body (10, 10A, 10B), a fastening unit (20, 20A), a restricting member, and a fixing means. An outer peripheral surface of the main body (10, 10A, 10B) has a mounting surface (15) and a plurality of radial holes (16) formed by drilling downward from the mounting surface (15). The fastening unit (20, 20A) includes a plurality of springs (21) and a plurality of steel balls (22) that are disposed in the radial holes (16). The restricting member is a steel strap (30, 30A, 30B) disposed along the mounting surface (15) and covering the radial holes (16). The fixing means is for fixedly connecting the steel strap (30, 30A, 30B) to the main body (10, 10A, 10B). The steel strap (30, 30A, 30B) surrounds the main body (10, 10A, 10B).

## Description

### BACKGROUND OF THE INVENTION

### Technical Field

The present invention relates generally to an automatic tool changing mechanism of a machining apparatus, and more particularly to a socket that is mounted on a tool magazine and is adapted to receive a machining tool.

### Description of Related Art

A tool magazine in an automatic tool changing mechanism of a machining apparatus is a device for storing and changing tools during automatic machining. The tool magazine is provided with a plurality of sockets for being inserted by tool holders engaged with tools with different specifications. In order to prevent a tool holder from being detached improperly from a socket which causes damage to the tool holder or the tool and operation safety problems, the socket is typically provided with a fastening structure, as disclosed in Taiwanese utility model patent M563937 "Knife sheath structure with safety clamping device", Taiwanese utility model patent M439538 "Improved tool socket structure for machine center tool magazine", and Taiwanese utility model patent M477934 "Tool holder". The fastening structure of the patented technologies includes a plurality of radial holes provided on a rear section of the socket, wherein a steel ball and a spring are placed in each of the radial holes, and a screw is screwed into each of the radial holes to prevent the steel ball and the spring from being detached. An elastic force of the spring pushes the steel ball to tightly abut against an end of the tool holder inserted into the socket, so that the tool holder is firmly stuck, thereby preventing the tool holder from being detached improperly.

The fastening structure of the patented technologies could prevent the tool holder from being detached improperly. However, as a depth of each of the radial holes of the socket is limited and the screws and the steel balls occupy a part of a space of the radial holes, the springs could only be provided with short lengths, wherein a length of the spring is a distance between two ends of the spring before the spring deforms. As a result, the springs with the short lengths would have a helical coil with a smaller number of turns. When the tool holder enters or exits from the socket to push the steel balls, the steel balls move to compress and deform the springs. However, compression and deformation of the springs are achieved by twisting the helical coil. When the springs with the short lengths are repeatedly subjected to a compression force, a load of the helical coil is increased. The load is particularly significant in a part of the helical coil close to the steel balls. Cracks and damage on the helical coil occur over time due to fatigue. Moreover, screwing each of the screws into each of the radial holes is labor-consuming. When the depths of the screws screwed into the radial holes are different, the forces exerted by the springs pushing the steel balls are different.

### BRIEF SUMMARY OF THE INVENTION

In view of the above, the primary objective of the present invention is to provide a socket for receiving a machining tool, wherein a load of a helical coil of a spring of a fastening structure could be decreased when the spring is subjected to a compression force, thereby lengthening the service life of the spring.

The present invention provides a socket for receiving a machining tool, including a main body, a fastening unit, and a restricting member. The main body has a receiving space and at least one radial hole. An outer peripheral surface of the main body has a mounting surface. The receiving space adapted to receive the machining tool. The at least one radial hole is radially disposed on the mounting surface and communicates with the receiving space. The fastening unit includes at least one spring and at least one steel ball. The at least one spring and at least one steel ball are disposed in the at least one radial hole of the main body. An end of the at least one spring abuts against the at least one steel ball, so that a surface of the at least one steel ball is partially exposed in the receiving space, The restricting member is fixedly connected to the main body. The restricting member has a restricting surface. The restricting surface is in contact with the mounting surface of the main body. Another end of the at least one spring abuts against the restricting surface.

In an embodiment, the restricting member includes a steel strap that is a long strip. The steel strap has an outer surface and an inner surface that are opposite to each other. The inner surface constitutes the restricting surface. The socket includes a fixing means adapted to fixedly connect the steel strap to the main body. The steel strap surrounds the main body.

In an embodiment, the outer peripheral surface of the main body has an annular groove. A bottom of the annular groove constitutes the mounting surface. The steel strap is located in the annular groove and surrounds the main body.

With the aforementioned design, the present invention could make use of springs with longer lengths for constituting a part of the fastening structure while the socket of the present invention has a specification the same as the conventional socket. When the springs of the present invention are subjected to the compression force, the compression force could be effectively distributed due to the longer length of the springs, thereby lengthening the service life of the springs.

### BRIEF DESCRIPTION OF THE SEVERAL VIEWS OF THE DRAWINGS

The present invention will be best understood by referring to the following detailed description of some illustrative embodiments in conjunction with the accompanying drawings, in which
FIG. 1 is a perspective view of the socket and the machining tool according to a first embodiment of the present invention;
FIG. 2 is an exploded view of the socket according to the first embodiment of the present invention;
FIG. 3 is a schematic sectional view of the socket and the machining tool according to the first embodiment of the present invention;
FIG. 4 is a sectional view along the 4-4 line in FIG. 3;
FIG. 5 is a perspective view of the main body of the socket according to the first embodiment of the present invention;
FIG. 6 is a sectional view along the 6-6 line in FIG. 5;
FIG. 7 is similar to FIG. 4, showing that the steel strap is fixed on the main body through one fixing member;
FIG. 8 is an exploded view of the socket according to a second embodiment of the present invention;
FIG. 9 is a schematic sectional view of the socket in FIG. 8;
FIG. 10 is a sectional view along the 10-10 line in FIG. 9;
FIG. 11 is a perspective view of the socket according to a third embodiment of the present invention; and
FIG. 12 is a schematic sectional view of the socket in FIG. 11.

### DETAILED DESCRIPTION OF THE INVENTION

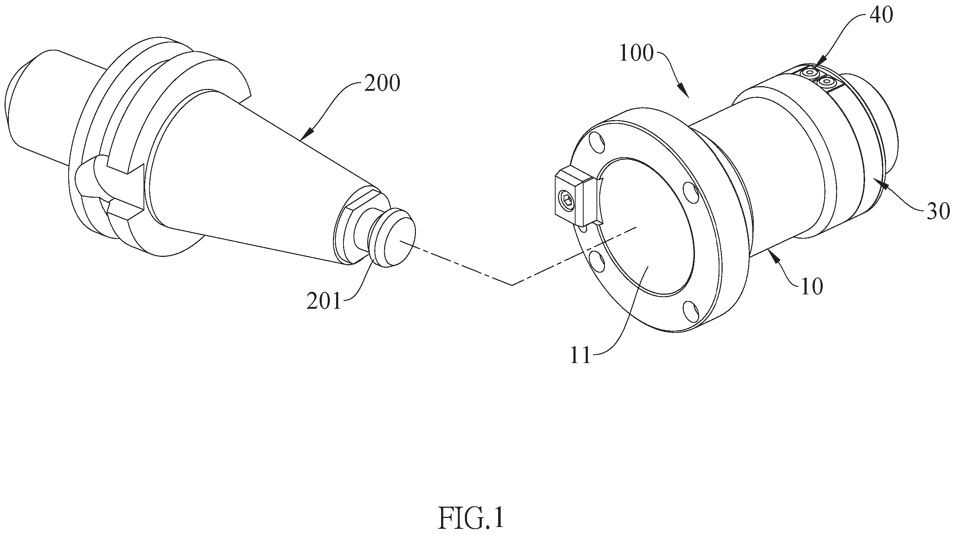

A socket for receiving a machining tool of the present invention is similar to a conventional socket to have the same outer diameter. When springs of the socket of the present invention are compressed and deformed, a compression force could be effectively distributed to reduce a load of a helical coil of the springs, thereby lengthening the service life of the springs. A socket 100 for receiving a machining tool 200 according to a first embodiment of the present invention is illustrated in FIG. 1 to FIG. 4 and includes a main body 10, a fastening unit 20, a restricting member, and a fixing means.

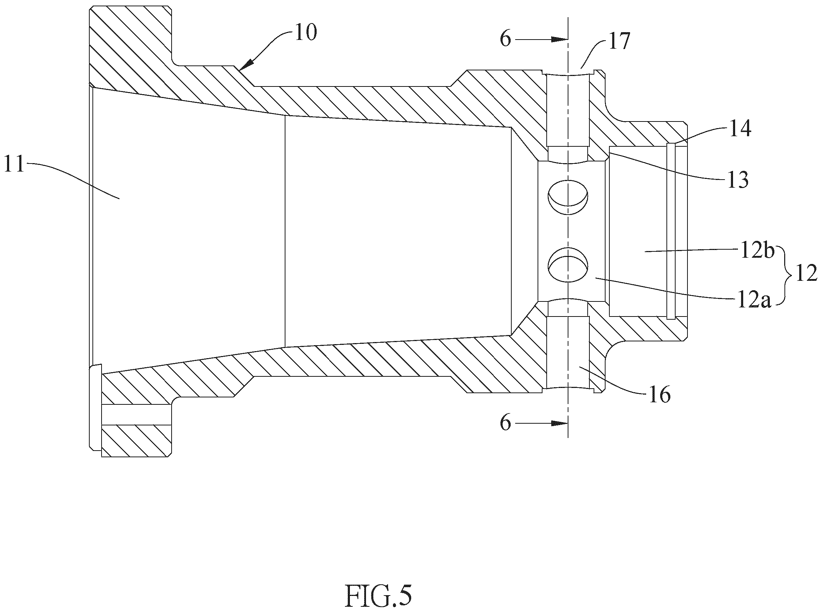

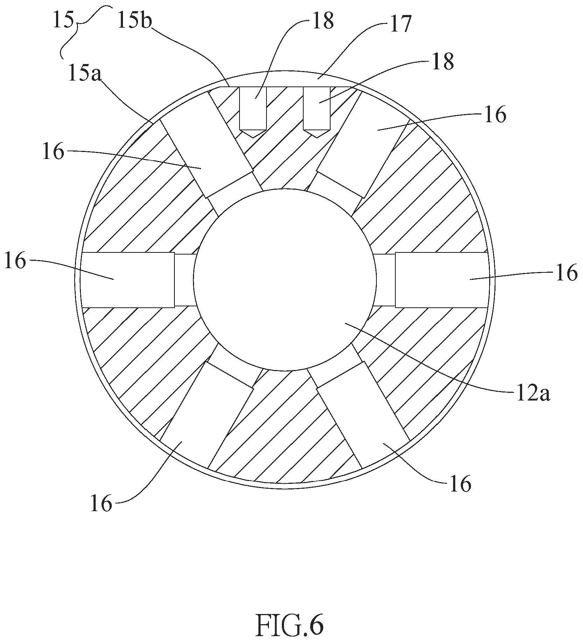

Referring to FIG. 5 and FIG. 6, the main body 10 is a cylindrical tube and has a tapered hole 11 and an axial hole 12 that communicate with each other. The tapered hole 11 and the axial hole 12 jointly form a receiving space of the present invention. The axial hole 12 is constituted of an inner section 12a and an outer section 12b. The inner section 12a communicates with the tapered hole 11. A hole diameter of the inner section 12a is less than a hole diameter of the outer section 12b. An abutting surface 13 is formed on a connection between the inner section 12a and the outer section 12b. A groove 14 is formed by recessing into a hole wall of the outer section 12b. An axis L, which is virtual, is defined and passes through a center of the tapered hole 11 and a center of the axial hole 12. The machining tool 200 could enter and exit from the tapered hole 11 along the axis L. In the current embodiment, the machining tool 200 is a tool holder that could be engaged with a tool.

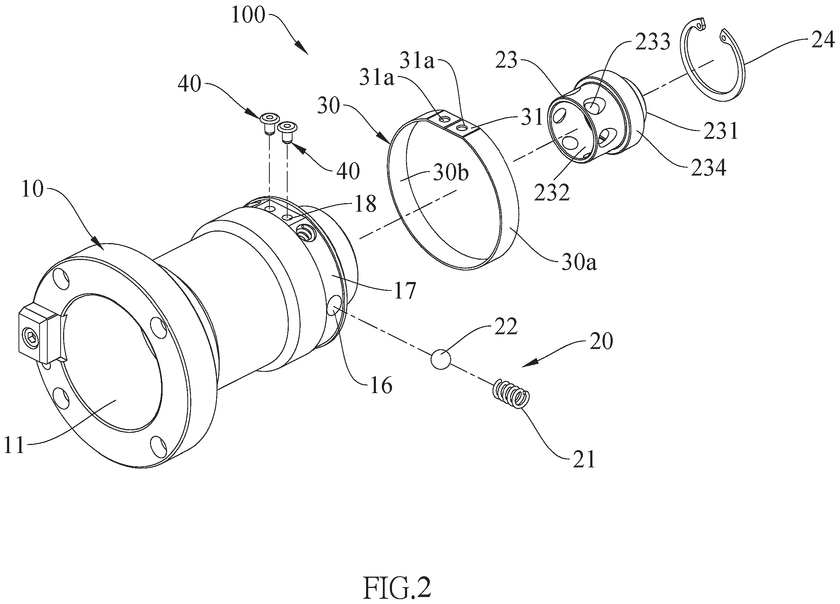

An outer peripheral surface of the main body 10 has a mounting surface 15 and at least one radial hole 16 radially disposed on the mounting surface 15 and communicating with the axial hole 12. Referring to FIG. 2 and FIG. 6, an outer peripheral surface of an end of the main body 10, which is opposite to another end of the main body 10 where the machining tool 200 is inserted into the tapered hole 11, is recessed to form an annular groove 17. A bottom of the annular groove 17 constitutes the mounting surface 15. The mounting surface 15 is constituted of a curved section 15a and a flat section 15b. The at least one radial hole 16 includes a plurality of radial holes 16, wherein the radial holes 16 are arranged by intervals, are radially disposed on the curved section 15a, and communicate with the inner section 12a of the axial hole 12. It is worth mentioning that in other application examples, the number of the radial hole 16 could be increased or decreased based on requirements.

The fastening unit 20 includes at least one spring 21, at least one steel ball 22, an unfastening member 23, and a blocking member 24. In the current embodiment, the number of the spring 21 and the number of the steel ball 22 correspond to the number of the radial hole 16 to be plural, and each of the springs 21 and each of the steel balls 22 are disposed in each of the radial holes 16. The unfastening member 23 is a cylindrical tube that is movable in the axial hole 12 of the main body 10 along the axis L. The unfastening member 23 has a closed end 231, a recessed hole 232, at least one side hole 233, and an annular protrusion 234. The at least one side hole 233 is located on a tube wall of the unfastening member 23 and communicates with the recessed hole 232. In the current embodiment, the number of the side hole 233 is the same as the number of the radial hole 16. The annular protrusion 234 is formed by protruding outward from the tube wall of the unfastening member 23. The blocking member 24 is a C-shaped retaining ring. After the unfastening member 23 is placed in the axial hole 12, the blocking member 24 is fitted into the groove 14 of the main body 10 and is fixedly connected to the outer section 12b. When the unfastening member 23 is moved, the annular protrusion 234 could be in contact either with the abutting surface 13 or the blocking member 24. When the annular protrusion 234 is in contact with the abutting surface 13, the unfastening member 23 is restricted from continuously moving forward. When the annular protrusion 234 is in contact with the blocking member 24, the unfastening member 23 could be prevented from being detached relative to the main body 10.

The restricting member is fixedly connected to the main body 10 and has a restricting surface that could be in contact with the mounting surface 15 of the main body 10. The restricting member is adapted to restrict the springs 21 and the steel balls 22 in the radial holes 16 of the main body 10. In the current embodiment, the restricting member works with the fixing means to achieve the aforementioned purpose. Referring to FIG. 2 to FIG. 4, in the current embodiment, the restricting member is a steel strap 30 that is a long strip; the steel strap 30 has an outer surface 30a and an inner surface 30b that are opposite to each other; the inner surface 30b constitutes the restricting surface; a width of the steel strap 30 is similar to a width of the annular groove 17 of the main body 10; two restricting sections 31, which are bent, are respectively provided on two ends of the steel strap 30; each of the restricting sections 31 has a through hole 31a.

In the current embodiment, the fixing means includes two fixing members 40 and two fixing holes 18 formed by drilling vertically downward from the flat section 15b of the main body 10. Each of the fixing members 40 has a body 41 and a head 42 located on an end of the body 41. When the steel strap 30 is placed in the annular groove 17 and surrounds the main body 10, the body 41 of each of the fixing members 40 passes through each of the through holes 31a of the steel strap 30 and is correspondingly inserted into each of the fixing holes 18, the head 42 of each of the fixing members 40 tightly abuts against the outer surface 30a of the steel strap 30, and each of the restricting sections 31 of the steel strap 30 is flatly laid on the flat section 15b of the mounting surface 15. In this way, the steel strap 30 is fixedly connected to the main body 10 in a surrounding manner, and the steel strap 30 is located in the annular groove 17 without being detached relative to the main body 10, thereby effectively securing positions of the springs 21 and the steel balls 22.

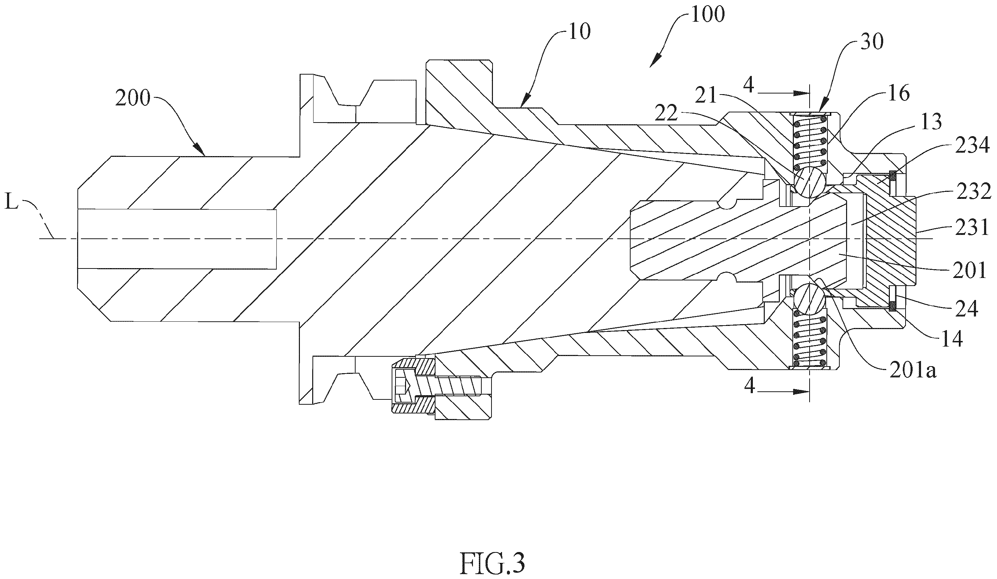

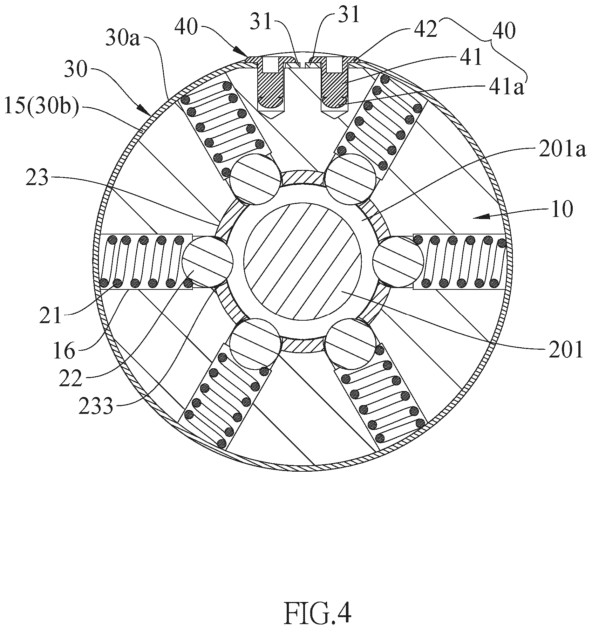

Referring to FIG. 3 and FIG. 4, after assembling, an end of each of the springs 21 abuts against the inner surface 30b (i.e., the restricting surface) of the steel strap 30, and another end of each of the springs 21 abuts against each of the steel balls 22. An elastic force of each of the springs 21 drives each of the steel balls 22 to partially pass through each of the side holes 233 of the unfastening member 23, wherein a surface of each of the steel balls 22 is partially exposed in the recessed hole 232 (i.e., exposed in the receiving space). When the socket 100 receives the machining tool 200, an end portion 201 of the machining tool 200 enters the recessed hole 232 of the unfastening member 23, and the steel balls 22 abut against an abutted surface 201a of the end portion 201, so that the machining tool 200 is stably inserted into the tapered hole 11 of the main body 10, thereby fastening the machining tool 200. In contrast, when a force is applied on the closed end 231 of the unfastening member 23, the unfastening member 23 could be pushed toward the machining tool 200, and the unfastening member 23 forces the steel balls 22 to move radially outward and to compress and deform the springs 21; when the steel balls 22 leave a moving path of the end portion 201 and are not in contact with the abutted surface 201a of the end portion 201, the machining tool 200 could be easily withdrawn, thereby unfastening the machining tool 200.

The structure and the use of the socket 100 are explained as above. How the present invention could relieve the fatigue problem of the spring is illustrated as below.

In the current embodiment, the restricting member is the steel strap 30 that is tough. In a conventional socket, screws for preventing springs and steel balls from being detached are required to screw into radial holes and occupy a part of a space of the radial holes. As a result, the conventional socket could only make use of springs with shorter lengths. In comparison with the conventional socket that has the same outer diameter as the socket 100 of the present invention, the radial holes 16 of the main body 10 of the socket 100 of the present invention do not require screws for preventing the springs 21 and the steel balls 22 from being detached. Therefore, the socket 100 of the present invention could make use of springs with longer lengths. In other words, in the current embodiment, the number of turns of the helical coils of the springs 21 are increased. When the springs 21 are subjected to a compression force and hence the helical coil is twisted, the compression force could be effectively distributed on the helical coils of the springs 21, so that a load of each of the helical coils could be decreased and a service life of the springs 21 could be lengthened, thereby improving the stability of the socket 100 in receiving the machining tool 200. Moreover, the main body 10 is surrounded by a single steel strap 30, so that the assembling efficiency could be improved and forces of the springs 21 in the radial holes 16 pushing the steel balls 22 could be balanced.

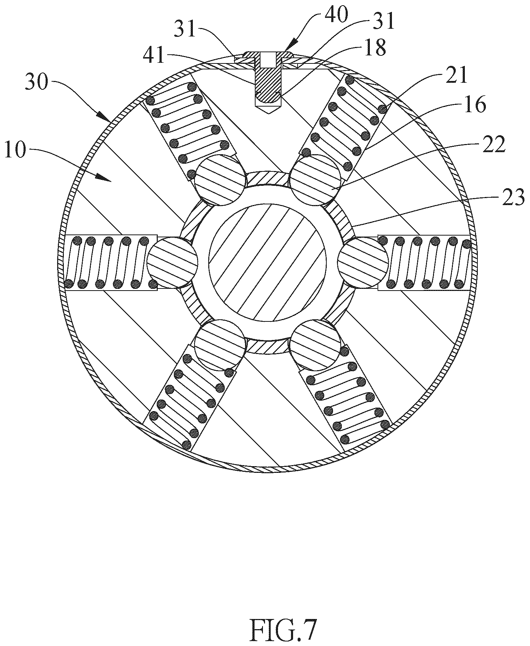

The fixing means achieves the connection between the steel strap 30 and the main body 10 by the fixing members 40 passing through the steel strap 30 and the main body 10. In order to reinforce the effect of the fixing member 40 in fixing the main body 10, the body 41 of each of the fixing members 40 is press-fit into the each of the fixing holes 18. Preferably, the body 41 has a circular deformation portion 41a, wherein an outer diameter of the circular deformation portion 41a is greater than a hole diameter of each of the fixing holes 18. In an application example, each of the fixing members 40 is a blind rivet; by withdrawing a mandrel of the blind rivet, a body of the blind rivet is forced to expand and deform outward, wherein a part of the blind rivet being expanded and deformed forms the circular deformation portion 41a, thereby stably fixing the fixing members 40 on the main body 10. Moreover, in another application example, each of the fixing members 40 could be a bolt; each of the fixing holes 18 is a screw hole; the fixing members 40 are fixedly connected to the main body 10 by screwing. The number of the fixing member 40 is two and the number of the fixing hole 18 is two as an example. In practice, the number of the fixing member 40 could be one and the number of the fixing hole 18 could be one; in this case, a length of the steel strap 30 must be greater than a perimeter of the outer peripheral surface of the main body 10; referring to FIG. 7, at that time, the two restricting sections 31 of the two ends of the steel strap 30 are stacked, the single fixing member 40 passes through the two through holes 31a of the two restricting sections 31, and the body 41 of the fixing member 40 directly enters the single fixing hole 18, thereby fixing the steel strap 30 in the main body 10.

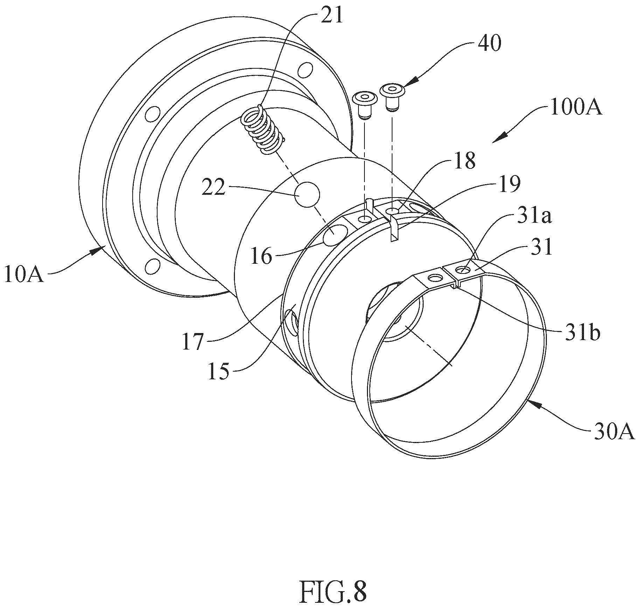

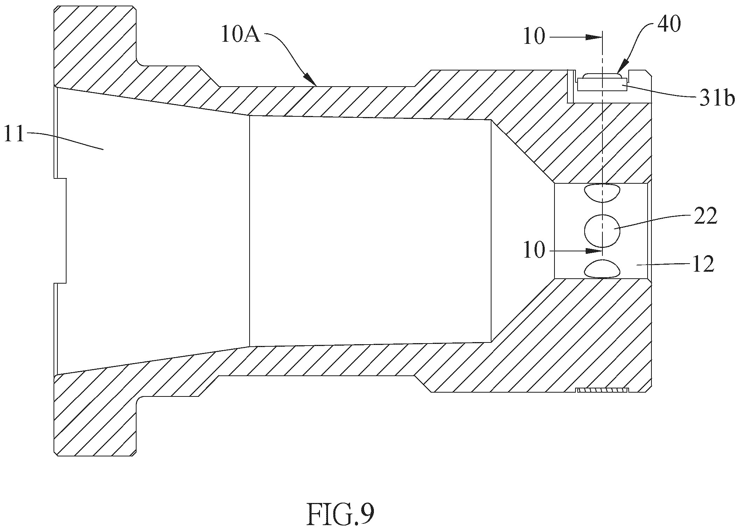

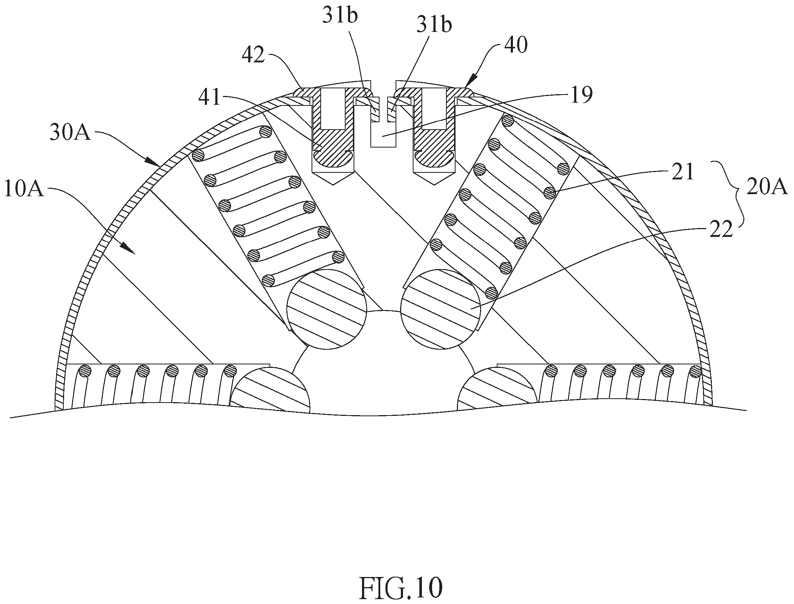

A socket 100A according to a second embodiment of the present invention is illustrated in FIG. 8 to Fig. 10. A fastening unit 20A of the socket 100A of the second embodiment has the springs 21 and the steel balls 22 that are the same as the fastening unit 20 of the first embodiment, but the fastening unit 20A of the socket 100A of the second embodiment is provided without the unfastening member 23 and the blocking member 24. Therefore, a main body 10A of the socket 100A of the second embodiment is provided without the structures of the first embodiment that are for mounting the unfastening member 23 and the blocking member 24. Moreover, the main body 10A has a tapered hole 11, an axial hole 12, a mounting surface 15, a plurality of radial holes 16, an annular groove 17, and two fixing holes 18 that are the same as that of the first embodiment, and the springs 21 and the steel balls 22 are similarly placed in the radial holes 16. The difference between the second embodiment and the first embodiment is that the main body 10A of the second embodiment further has a slot 19, and a terminal end of each of two restricting sections 31 of a steel strap 30A is inwardly bent to form a fitting sheet 31b. The slot 19 is radially disposed at the midpoint between the two fixing holes 18 and is formed by cutting through the mounting surface 15. When the steel strap 30A surrounds the main body 10A, the fitting sheets 31b of the steel strap 30A are fitted into the slot 19 at the same time. In this way, after two fixing members 40 pass through two through holes 31a of the steel strap 30A to enter the two fixing holes 18 of the main body 10A, the steel strap 30A is fixed on the main body 10A, and the each of the fitting sheets 31b tightly abuts against a side wall of the slot 19, so that a pulling force due to the restoring property of the steel strap 30A could be properly offset, thereby ensuring that the two through holes 31a of the steel strap 30A would not deform. It is worth mentioning that the slot 19 and the two fitting sheet 31b are applicable to the socket 100 of the first embodiment.

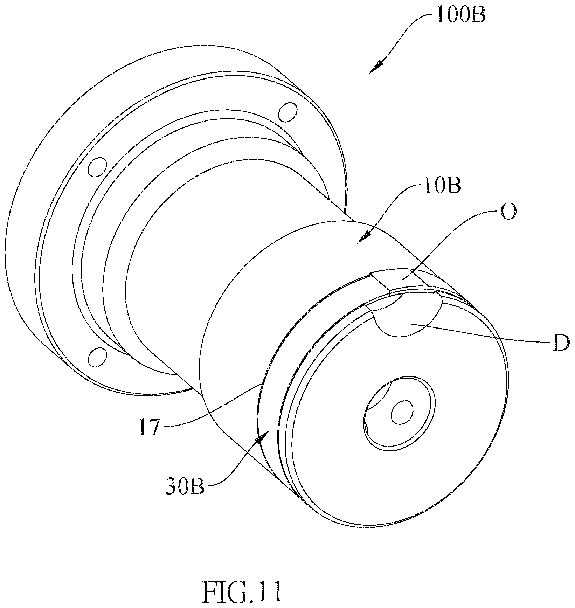

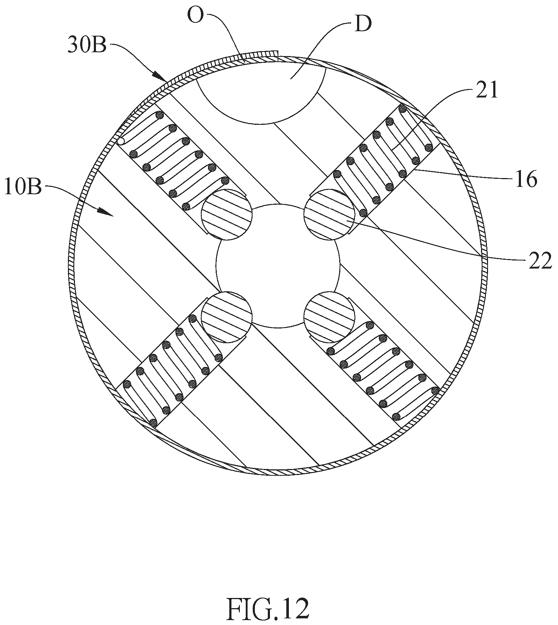

The fixing means of the socket 100 (100A) of the first embodiment (the second embodiment) is to fixedly connect the steel strap 30 (30A) to the main body 10 (10A) by using the two fixing members 40 to pass through the two through holes 31a of the steel strap 30 (30A) and the two fixing holes 18 of the main body 10 (10A). Apart from the fixing means as described in the first embodiment and the second embodiment, a fixing means of a socket 100B according to a third embodiment of the present invention makes use of spot welding or pressure welding. Referring to FIG. 11 and FIG. 12, a main body 10B of the socket 100B has a recess D, a steel strap 30B surrounds the main body 10B and is located in an annular groove 17 of the main body 10B. Two ends of the steel strap 30B are stacked to form an overlapped portion O. An apparatus that is used for spot welding or pressure welding could enter the recess D and perform welding or heating and pressing on the overlapped portion O, thereby fixedly connecting the two ends of the steel strap 30B.

It can be seen from the above that any way that could surround the main body with one steel strap and restrict the springs and the steel balls in the radial holes should fall within the scope of the present invention, wherein the fixing means should not be limited to the fixing member working with the fixing hole or spot welding or pressure welding.

The purpose of providing the annular groove on the outer peripheral surface of the main body of the aforementioned embodiments is to ensure that the steel strap would not be detached relative to the main body. However, it is worth mentioning that if the steel strap is ensured not to move freely, the structure of the annular groove is not necessary. For example, the steel strap could be restricted from moving freely by providing a block protruding from the outer peripheral surface of the steel strap. Moreover, in the aforementioned embodiments, the bottom of the annular groove has the flat section, and the two ends of the steel strap have the two restricting sections; by the restricting sections tightly abutting against the flat section, the fixing member could be quickly positioned for fixed connection. However, in practice, when the bottom of the annular groove is provided without the flat section, the two ends of the steel strap could be provided without the restricting sections, which do not affect the fixed connection function of the fixing member.

In the aforementioned embodiments, the main body is a cylindrical tube and hence the mounting surface disposed along the outer peripheral surface of the main body includes the curved section. In practice, the main body is not limited to be a cylindrical tube. For example, as disclosed in Taiwanese utility model patent M563937, the part of the main body for mounting the springs and the steel balls is not a cylindrical tube. As long as the mounting surface is disposed along the outer peripheral surface of the main body (in a continuous manner, fragment manner, or other manners), all equivalent structures employing the same concept should fall within the scope of the present invention.

In summary, the present invention makes use of one steel strap to surround the main body and to restrict the spring and the steel ball in the radial hole. In this way, the problem of the conventional technology that requires a plurality of screws for preventing the steel balls and the springs in the radial holes from being detached could be relieved, thereby reducing manpower required in assembling and ensuring balanced forces of the spring pushing the steel balls. The screws in the conventional technology occupy the space of the radial holes. The present invention is provided without the screws in the conventional technology for securing the steel balls and the springs, so that springs with longer lengths could be used in the present invention to reduce the load of the helical coil, thereby lengthening the service life of the springs and improving the stability of the socket in receiving the machining tool.

## Claims

1. A socket (100, 100A, 100B) for receiving a machining tool (200), comprising:
a main body (10, 10A, 10B) having a receiving space and at least one radial hole (16), wherein an outer peripheral surface of the main body (10, 10A, 10B) has a mounting surface (15); the receiving space is adapted to receive the machining tool (200); the at least one radial hole (16) is radially disposed on the mounting surface (15) and communicates with the receiving space;
a fastening unit (20, 20A) including at least one spring (21) and at least one steel ball (22), wherein the at least one spring (21) and the at least one steel ball (22) are disposed in the at least one radial hole (16) of the main body (10, 10A, 10B); an end of the at least one spring (21) abuts against the at least one steel ball (22), so that a surface of the at least one steel ball (22) is partially exposed in the receiving space; and
a restricting member fixedly connected to the main body (10, 10A, 10B), wherein the restricting member has a restricting surface; the restricting surface is in contact with the mounting surface (15) of the main body (10, 10A, 10B); another end of the at least one spring (21) abuts against the restricting surface.

2. The socket (100, 100A, 100B) as claimed in claim 1, wherein the restricting member includes a steel strap (30, 30A, 30B) that is a long strip; the steel strap (30, 30A, 30B) has an outer surface (30a) and an inner surface (30b) that are opposite to each other; the inner surface (30b) constitutes the restricting surface; the socket (100, 100A, 100B) includes a fixing means adapted to fixedly connect the steel strap (30, 30A, 30B) to the main body (10, 10A, 10B); the steel strap (30, 30A, 30B) surrounds the main body (10, 10A, 10B).

3. The socket (100, 100A, 100B) as claimed in claim 2, wherein the fixing means includes at least one fixing member (40) and at least one fixing hole (18) formed by recessing from the mounting surface (15) of the main body (10, 10A, 10B); the at least one fixing member (40) has a body (41) and a head (42); the body (41) passes through the steel strap (30, 30A, 30B) to enter the at least one fixing hole (18); the head (42) is located on an end of the body (41) and abuts against the outer surface (30a) of the steel strap (30, 30A, 30B).

4. The socket (100, 100A, 100B) as claimed in claim 3, wherein the body (41) of the at least one fixing member (40) is press-fit into the at least one fixing hole (18).

5. The socket (100, 100A, 100B) as claimed in claim 4, wherein the body (41) of the at least one fixing member (40) has a circular deformation portion (41a); an outer diameter of the circular deformation portion (41a) is greater than a hole diameter of the at least one fixing hole (18).

6. The socket (100, 100A, 100B) as claimed in claim 2, wherein the outer peripheral surface of the main body (10, 10A, 10B) has an annular groove (17); a bottom of the annular groove (17) constitutes the mounting surface (15); the steel strap (30, 30A, 30B) is located in the annular groove (17) and surrounds the main body (10, 10A, 10B).

7. The socket (100, 100A, 100B) as claimed in claim 3, wherein the mounting surface (15) of the main body (10, 10A, 10B) has a flat section (15b); the at least one fixing hole (18) is formed by drilling downward in a direction perpendicular to the flat section (15b); the steel strap (30, 30A, 30B) has at least one restricting section (31) flatly laid on the flat section (15b); the body (41) of the at least one fixing member (40) passes through the at least one restricting section (31); the head (42) abuts against the outer surface (30a) of the at least one restricting section (31) of the steel strap (30, 30A, 30B).

8. The socket (100, 100A, 100B) as claimed in any one of claims 2-7, wherein the main body (10, 10A, 10B) has a slot (19), the slot (19) is formed by radially cutting through the mounting surface (15); the steel strap (30, 30A, 30B) has two opposite ends; two fitting sheets (31b) are respectively formed on the two opposite ends of the steel strap (30, 30A, 30B); each of the two fitting sheets (31b) fits into the slot (19).

9. The socket (100, 100A, 100B) as claimed in claim 1, wherein the machining tool (200) has an end portion (201); the end portion (201) has an abutted surface (201a); the receiving space of the main body (10, 10A, 10B) includes an axial hole (12); the at least one radial hole (16) communicates with the axial hole (12); the fastening unit (20, 20A) includes an unfastening member (23) that is movable in the axial hole (12); the unfastening member (23) is a cylindrical tube and has at least one side hole (233); a part of the at least one steel ball (22) passes through the at least one side hole (233); when the at least one steel ball (22) is in contact with the abutted surface (201a) of the end portion (201) of the machining tool (200), the machining tool (200) is restricted from being withdrawn from the receiving space; when the at least one steel ball (22) is not in contact with the abutted surface (201a) of the end portion (201) of the machining tool (200), the machining tool (200) is detachable from the receiving space.

10. The socket (100, 100A, 100B) as claimed in claim 9, wherein the axial hole (12) includes an inner section (12a) and an outer section (12b); a hole diameter of the inner section (12a) is less than a hole diameter of the outer section (12b); an abutting surface (13) is provided on a connection between the inner section (12a) and the outer section (12b) of the main body (10, 10A, 10B); the fastening unit (20, 20A) includes a blocking member (24); the blocking member (24) is fixedly connected in the outer section (12b); the unfastening member (23) has an annular protrusion (234); the annular protrusion (234) is adapted to be in contact either with the abutting surface (13) or the blocking member (24).

## Amended claims

### Amended claims in accordance with Rule 137(2) EPC.

1. A socket (100, 100A, 100B) for receiving a machining tool (200), comprising:
a main body (10, 10A, 10B) having a receiving space and at least one radial hole (16), wherein an outer peripheral surface of the main body (10, 10A, 10B) has a mounting surface (15); the receiving space is adapted to receive the machining tool (200); the at least one radial hole (16) is radially disposed on the mounting surface (15) and communicates with the receiving space;
a fastening unit (20, 20A) including at least one spring (21) and at least one steel ball (22), wherein the at least one spring (21) and the at least one steel ball (22) are disposed in the at least one radial hole (16) of the main body (10, 10A, 10B); an end of the at least one spring (21) abuts against the at least one steel ball (22), so that a surface of the at least one steel ball (22) is partially exposed in the receiving space; and
a restricting member fixedly connected to the main body (10, 10A, 10B), wherein the restricting member has a restricting surface; the restricting surface is in contact with the mounting surface (15) of the main body (10, 10A, 10B); another end of the at least one spring (21) abuts against the restricting surface;
the socket (100, 100A, 100B) **characterized in that**:
the restricting member includes a steel strap (30, 30A, 30B) that is a long strip; the steel strap (30, 30A, 30B) has an outer surface (30a) and an inner surface (30b) that are opposite to each other; the inner surface (30b) constitutes the restricting surface; the socket (100, 100A, 100B) includes a fixing means adapted to fixedly connect the steel strap (30, 30A, 30B) to the main body (10, 10A, 10B); the steel strap (30, 30A, 30B) surrounds the main body (10, 10A, 10B);
the fixing means includes at least one fixing member (40) and at least one fixing hole (18) formed by recessing from the mounting surface (15) of the main body (10, 10A, 10B); the at least one fixing member (40) has a body (41) and a head (42); the body (41) passes through the steel strap (30, 30A, 30B) to enter the at least one fixing hole (18); the head (42) is located on an end of the body (41) and abuts against the outer surface (30a) of the steel strap (30, 30A, 30B);
the mounting surface (15) of the main body (10, 10A, 10B) has a flat section (15b); the at least one fixing hole (18) is formed by drilling downward in a direction perpendicular to the flat section (15b); the steel strap (30, 30A, 30B) has at least one restricting section (31) flatly laid on the flat section (15b); the body (41) of the at least one fixing member (40) passes through the at least one restricting section (31); the head (42) abuts against the outer surface (30a) of the at least one restricting section (31) of the steel strap (30, 30A, 30B).

2. The socket (100, 100A, 100B) as claimed in claim 1, wherein the body (41) of the at least one fixing member (40) is press-fit into the at least one fixing hole (18).

3. The socket (100, 100A, 100B) as claimed in claim 2, wherein the body (41) of the at least one fixing member (40) has a circular deformation portion (41a); an outer diameter of the circular deformation portion (41a) is greater than a hole diameter of the at least one fixing hole (18).

4. The socket (100, 100A, 100B) as claimed in claim 1, wherein the outer peripheral surface of the main body (10, 10A, 10B) has an annular groove (17); a bottom of the annular groove (17) constitutes the mounting surface (15); the steel strap (30, 30A, 30B) is located in the annular groove (17) and surrounds the main body (10, 10A, 10B).

5. The socket (100, 100A, 100B) as claimed in any one of claims 2-4, wherein the main body (10, 10A, 10B) has a slot (19), the slot (19) is formed by radially cutting through the mounting surface (15); the steel strap (30, 30A, 30B) has two opposite ends; two fitting sheets (31b) are respectively formed on the two opposite ends of the steel strap (30, 30A, 30B); each of the two fitting sheets (31b) fits into the slot (19).

6. The socket (100, 100A, 100B) as claimed in claim 1, wherein the machining tool (200) has an end portion (201); the end portion (201) has an abutted surface (201a); the receiving space of the main body (10, 10A, 10B) includes an axial hole (12); the at least one radial hole (16) communicates with the axial hole (12); the fastening unit (20, 20A) includes an unfastening member (23) that is movable in the axial hole (12); the unfastening member (23) is a cylindrical tube and has at least one side hole (233); a part of the at least one steel ball (22) passes through the at least one side hole (233); when the at least one steel ball (22) is in contact with the abutted surface (201a) of the end portion (201) of the machining tool (200), the machining tool (200) is restricted from being withdrawn from the receiving space; when the at least one steel ball (22) is not in contact with the abutted surface (201a) of the end portion (201) of the machining tool (200), the machining tool (200) is detachable from the receiving space.

7. The socket (100, 100A, 100B) as claimed in claim 6, wherein the axial hole (12) includes an inner section (12a) and an outer section (12b); a hole diameter of the inner section (12a) is less than a hole diameter of the outer section (12b); an abutting surface (13) is provided on a connection between the inner section (12a) and the outer section (12b) of the main body (10, 10A, 10B); the fastening unit (20, 20A) includes a blocking member (24); the blocking member (24) is fixedly connected in the outer section (12b); the unfastening member (23) has an annular protrusion (234); the annular protrusion (234) is adapted to be in contact either with the abutting surface (13) or the blocking member (24).
